# EUROPÄISCHE PATENTANMELDUNG

(11) **EP 2 905 674 A1**
(43) Veröffentlichungstag der Anmeldung: **12.08.2015**
(21) Anmeldenummer: 15152161.4
(22) Anmeldetag: 22.01.2015
(51) Int. Cl.: G06F 3/00, G06F 21/31, G06F 3/02, H01H 13/807, H01H 13/702

(54) **Tastatur und System mit einer Tastatur**

(30) Priorität: 24.01.2014 DE 102014201289
(71) Anmelder: Fraunhofer-Gesellschaft zur Förderung der angewandten Forschung e.V., 80686 München (DE)
(72) Erfinder: Eichholz, Jörg, 25524 Itzehoe (DE); Giese, Thorsten, 25582 Hohenaspe (DE)
(74) Vertreter: Pfenning, Meinig & Partner GbR

(57) **Zusammenfassung**

Gegenstand der vorliegenden Erfindung ist eine Tastatur (1) mit einer Vielzahl von Eingabefeldern (3, 3', 3"), wobei mindestens eine Kontaktlage (8) mit einer Vielzahl von elektrischen Kontakten (9, 9', 9") und eine dielektrische Folie (4) mit einer vorderseitigen Elektrode (5) und einer rückseitigen Elektrode (6) vorhanden ist und die dielektrische Folie derart angeordnet ist, dass die rückseitige Elektrode mittels auf der vorderseitigen Elektrode aufgebrachten Drucks mit der Vielzahl von elektrischen Kontakten in Berührung gebracht werden kann.

## Beschreibung

Gegenstand der vorliegenden Erfindung ist eine Tastatur mit einer Vielzahl von Eingabefeldern sowie ein System mit einer Tastatur und einer dazugehörigen Steuereinrichtung.

Tastaturen sind, allgemein gesprochen, Eingabefelder, um die Bedienung von elektrischen und elektronischen Geräten zu vereinfachen. Hierbei sind oftmals vordefinierte Felder vorhanden, aus denen der Benutzer Zeichen auswählen kann und durch Berühren bzw. Drücken des Feldes eine Eingabe in das elektrische bzw. elektronische Gerät bewirken kann. Zumeist besitzen Tastaturen eine Vielzahl von vordefinierten Feldern. Beispiele hierfür sind z. B. die Eingabefelder eines Geldautomaten oder handelsübliche PC-Tastaturen.

Handelsübliche PC-Tastaturen bestehen beispielsweise aus einem Mehrfachfolienaufbau. Hierbei sind eine erste Folie, eine Zwischenlage und eine zweite Folie aufeinanderfolgend vorhanden, wobei die erste Folie einen elektrischen Kontakt und die zweite Folie einen zum Kontakt der ersten Folie hin gerichteten elektrischen Kontakt umfasst. Die beiden Kontakte sind zunächst durch die Zwischenlage voneinander getrennt. Wird nun eine Eingabe auf der Tastatur getätigt, wird Druck auf die erste Folie ausgeübt, bis der elektrische Kontakt der ersten Folie mit dem Kontakt der zweiten Folie in Berührung kommt. Hierdurch kommt es zu einem elektrischen Kurzschluss, und eine Steuereinrichtung der Tastatur kann diesen Kurzschluss als Eingabe mit einer Taste erkennen. Die Zwischenlage dient hierbei als Abstandsfolie, um einem permanenten Kurzschluss entgegenzuwirken. Zudem kann die Zwischenlage dazu dienen, die verschiedenen Eingabefelder bzw. Tasten voneinander abzutrennen.

Mit einer derartigen Tastatur ist es beispielsweise möglich, Passwörter einzugeben, wie beispielsweise eine PIN oder TAN oder ein Passwort für den Zugang zu einer Datenbank oder Ähnlichem. Wird das Passwort bzw. die dem Passwort entsprechende Zeichenfolge auf der Tastatur eingegeben, erkennt die Steuerelektronik dies und gewährt Zugang. Fällt aber das Passwort in fremde Hände, dann kann ein fremder Benutzer durch Verwendung des Passworts ebenso Zugang zu den dem Passworteigner vorbehaltenen Informationen erhalten.

Im Stand der Technik sind zahlreiche Methoden bekannt, um Passwörter bzw. die Passworteingabe zusätzlich zu schützen. Hierbei sind beispielsweise biometrische Methoden bekannt.

Aufgabe der vorliegenden Erfindung ist es, auf dem Markt erhältliche Tastaturen zu ergänzen, um ein sichereres Auslesen von Informationen zu ermöglichen.

Die Aufgabe wird durch eine Tastatur nach den Merkmalen des Anspruchs 1 sowie ein System nach den Merkmalen des Anspruchs 8 oder ein System nach dem Anspruch 11 gelöst.

Die Tastatur weist eine Vielzahl von Eingabefeldern auf, wobei mindestens eine Kontaktiage mit einer Vielzahl von elektrischen Kontakten und eine dielektrische Folie, vorzugsweise eine dielektrische Elastomerfolie, mit einer vorderseitigen Elektrode und einer rückseitigen Elektrode vorhanden ist. Nachfolgend sei definitionsgemäß die rückseitige Elektrode der dielektrischen Folie den elektrischen Kontakten der Kontaktlage zugewandt, wohingegen die vorderseitige Elektrode diesen Kontakten abgewandt ist. Die Kontaktlage und die dielektrische Folie sind derart zueinander angeordnet, dass die rückseitige Elektrode mittels auf der vorderseitigen Elektrode aufgebrachten Drucks, beispielsweise durch eine Tasten- oder einen Fingerdruck, mit zumindest jeweils einem der Vielzahl von elektrischen Kontakten in Berührung gebracht werden kann.

Durch das Vorhandensein einer Vielzahl von elektrischen Kontakten, die auf einer Kontaktlage vorgehalten werden, ist es möglich, die verschiedenen Eingabefelder bzw. Eingaben darin digital auszuwerten. Das heißt, sobald die rückseitige Elektrode mit einem der Vielzahl von elektrischen Kontakten in Berührung kommt, ist eine Auswerteschaltung in der Lage, das durch die Kontaktierung bewirkte Signal zu erkennen und als Tastendruck oder Eingabefelddruck zu erkennen.

Zugleich ist es jedoch auch möglich, eine Spannung bzw. eine Kapazität zwischen der vorderseitigen und der rückseitigen Elektrode der dielektrischen Folie zu erfassen. Dieses Signal ist analoger Natur und kann in seinem Zeitverlauf aufgezeichnet werden. Wird nun die Tastatur zur Eingabe verwendet, kann mit Hilfe der Kontaktlage die exakte Zeichenfolge ermittelt werden, wohingegen es mittels der dielektrischen Folie möglich ist, ein analoges Signal aufzuzeichnen, das Erkenntnisse über beispielsweise den über die Zeit aufgebrachten Druck liefern kann.

Somit ist es möglich, zwei Signale, die unabhängig voneinander ermittelt werden, zur Auswertung und zur Bewertung dessen heranzuziehen, ob die Eingabe durch den berechtigten Benutzer vorgenommen wurde.

So ist es beispielsweise möglich, zu unterscheiden, ob die gewünschte Zeichenfolge von einem ersten oder zweiten Benutzer vorgenommen wurde, da das zeitabhängige Signal zwischen der vorderseitigen und rückseitigen Elektrode während der Eingabe der Zeichenfolge aufzeichenbar ist.

Zugleich ist jedoch sichergestellt, dass das zwischen der vorderseitigen und rückseitigen Elektrode abgegriffene Signal unabhängig von dem über die Kontaktlage abgegriffenen Signal möglich ist. Da die vorgenannten beiden Signale unabhängig voneinander ausgewertet werden können, existieren zwei unabhängige Mechanismen innerhalb einer Tastatur, die durch ggf. jeweils eine Steuerschaltung ausgelesen werden können, um festzustellen, ob der berechtigte Benutzer die Eingabe vorgenommen hat oder nicht.

Dielektrische Folien bzw. dielektrische Elastomerfolien werden bevorzugt zum Erfassen des analogen Signals bevorzugt verwendet. Dielektrische Elastomerfolien zeichnen sich dadurch aus, dass sich ihre elektrische Kapazität C_{EL} bei Dehnung der Folie ändert. Das heißt: Wird eine Eingabe auf der Tastatur getätigt, indem auf ein Eingabefeld, beispielsweise mittels einer Taste, gedrückt wird, dehnt sich die Folie in diesem Bereich aus und ändert ihre elektrische Kapazität. Diese zeitliche Änderung der Kapazität kann mittels einer Schaltung ausgewertet bzw. aufgezeichnet werden. Hierbei kann in einem System mit einer Tastatur wie oben beschrieben und einer Steuerschaltung vorgesehen sein, dass die Steuerschaltung eine Spannung zwischen der vorder- und rückseitigen Elektrode anlegt und aus der Potentialänderung zwischen der ersten und zweiten Elektrode die zeitabhängige bzw. druckabhängige Kapazitätsveränderung der Folie aufzeichnet.

Das zeitabhängige analoge Signal, das zwischen der vorder- und rückseitigen Elektrode der dielektrischen Folie abgegriffen wird, kann zur Ermittlung von biometrischen Eigenheiten verwendet werden und kann daher neben der eigentlichen Eingabe der Zeichenfolge auf der Tastatur zur Identifikation des berechtigten Benutzers dienen. Verfahren zur Bestimmung des berechtigten Benutzers mittels eines zeitabhängigen Drucksignals sind im Stand der Technik hinlänglich bekannt. Es wird beispielsweise auf die US 2010/0225443 A1 oder die US 6 442 692 B, die EP 1026 570 A2 oder die US 4 805 222 A1 verwiesen. Die vorgenannten Anmeldungen werden in ihrer Gesamtheit gänzlich in diese Anmeldung aufgenommen.

Als Materialien für die dielektrische Elastomerfolie können Silikone, Acryle oder Silikonkautschuk eingesetzt werden. Die Dicke der Folie kann dabei zwischen 0,1 und 3 mm, vorzugsweise zwischen 0,25 mm und 2 mm, variieren. Die Folie wird dabei zumeist planar, d. h. flächig, verwendet. Als Materialien für die vorderseitige und rückseitige Elektrode kommen beispielsweise Beschichtungen aus Graphit, Graphen oder Nanocarbon-Tubes oder andere leitende Beschichtungen in Frage. Die weiteren in der Tastatur verwendeten Folien weisen in einigen Ausführungsbeispielen eine der Größenordnung nach vergleichbare Dicke auf.

In einer weiteren Variante der Erfindung ist ein System mit einer Tastatur, die eine Vielzahl von Eingabefeldern aufweist und eine dielektrische Elastomerfolie mit einer vorder- und rückseitigen Elektrode umfasst, beschrieben. Das System umfasst zudem eine Steuervorrichtung, die eine Auswertungsschaltung zum Auslesen von Signalen der Vielzahl von Eingabefeldern umfasst, d. h. beispielsweise eine Multiplexerschaltung, welche die einzelnen Eingabefelder nacheinander ausliest und somit feststellen kann, ob eines der Felder eine Eingabe erfasst und damit ein Signal ausgelöst hat. Des Weiteren ist eine Additionsschaltung vorhanden, welche die Signale der Gesamtheit der Vielzahl von Eingabefeldern summiert und das aufsummierte Additionssignal bereitstellt.

Im Gegensatz zu dem ersten Ausführungsbeispiel der Tastatur ist in diesem Ausführungsbeispiel keine weitere Kontaktlage vonnöten. Die Ermittlung, ob eine Taste gedrückt wurde, kann dadurch vorgenommen werden, dass beim Überschreiten einer Schwelle, d. h. beim Überschreiten eines auf ein Eingabefeld aufgebrachten Drucks, ein digitales Signal fingiert wird, in dem Sinne, dass fingiert wird, dass die Taste gedrückt wurde. Nichtsdestotrotz bleibt das Signal jedoch analog und kann somit zusammengesetzt mit den anderen Eingabefeldern einen zeitlichen Verlauf des Drucks beim Eingeben der Zeichenfolge darstellen. Im Gegensatz zu dem vorhergehenden Beispiel sind hierbei das Auslesen der Zeichenfolge und das Auslesen des zeitlichen Druckverlaufs nicht mehr unabhängig voneinander, sondern werden voneinander abhängig.

Weitere Ausführungsbeispiele sind in den untergeordneten Ansprüchen bzw. nachfolgend aufgeführt.

In einer weiteren Ausführungsform umfasst die Tastatur zwischen der rückseitigen Elektrode und der Kontaktlage eine Zwischenlage. Diese kann beispielsweise auch aus einer nichtleitenden Folie bestehen oder diese umfassen. Mittels der Zwischenlage ist es möglich, die rückseitige Elektrode von einem elektrischen Kontakt zu beabstanden, so dass erst beim Aufbringen eines Drucks auf die Elastomerfolie der elektrische Kontakt mit der rückseitigen Elektrode in Berührung gelangt.

In einem weiteren Ausführungsbeispiel sind oberhalb der vorderseitigen Elektrode Tastenelemente beispielsweise in gleicher Zahl wie die Vielzahl von Eingabefeldern vorhanden, von denen jeweils eines einem Eingabefeld zugeordnet ist. Durch Druck der Taste wird diese auf die vorderseitige Elektrode aufgedrückt, so dass die gesamte Elastomerfolie eingedrückt wird und die rückseitige Elektrode mit dem elektrischen Kontakt, weicher der Taste gegenüberliegt, in Berührung gebracht werden kann bzw. der aufgebrachte Druck eine Schwelle überschreitet und einen Kontakt fingiert, d.h. da in manchen Ausführungsbeispielen keine Kontaktlage vorhanden ist, wird der Kontakt als gegeben fingiert, wenn die durch den Druck hervorgerufene Kapazitätsänderung eine vorgegebene Schwelle überschritten wird.

In einem weiteren Ausführungsbeispiel ist die rück- und/oder vorderseitige Elektrode jeweils als zusammenhängende Elektrode ausgebildet. Hierdurch ist die Auswertung des analogen Signals zwischen der rückseitigen und vorderseitigen Elektrode auf besonders einfache Art und Weise möglich. Die gesamte Elastomerfolie bildet dabei einen einzigen Kondensator. Zwar lässt sich durch Abgreifen der Kapazität bzw. einer über der Kapazität liegenden Spannung keinerlei Ortsauflösung mehr herbeiführen, dies ist jedoch zum Auswerten von biometrischen Merkmalen in diesem Falle auch nicht notwendig. Der Schaltungsaufbau vereinfacht sich, und eine Strukturierung der Elastomerfolie ist nicht notwendig. D.h. bei einer Eingabe eines Passworts kann aus der Kapazitätsmessung der dielektrischen Folie nicht auf das Passwort geschlossen werden, sondern die Eingabe kann mit dem Signal der Kapazitätsänderung der dielektrischen Folie biometrisch ausgewertet werden.

In einem weiteren Ausführungsbeispiel ist die rückseitige Elektrode derart in einen Schaltkreis integriert, dass diese Elektrode auf Masse geschaltet ist, d. h. ein Nullpotential bildet. Jedoch kann außer der Masse auch ein anderes festes Potential gewählt werden.

Weitere Ausführungsbeispiele werden in den nachfolgenden Zeichnungen erläutert. Dabei zeigt
- Fig. 1: eine schematische Aufsicht auf eine Tastatur;
- Fig. 2: einen Querschnitt durch die Tastatur der Figur 1;
- Fig. 3: ein Ersatzschaltbild der Tastatur der Figuren 1 und 2;
- Fig. 4: eine weitere Variante einer Tastatur im Querschnitt.

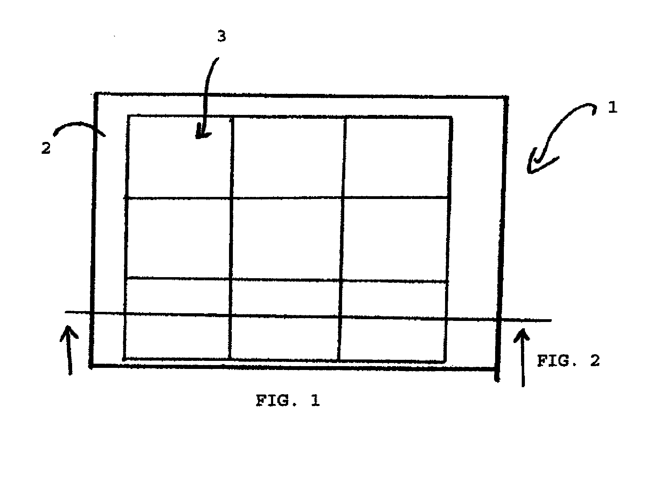

In Figur 1 ist eine schematische Ansicht einer Tastatur 1 dargestellt. Die Tastatur 1 weist auf ihrer Sichtseite 2 eine Vielzahl von Tastenelementen 3 auf, die zur Eingabe einer Zeichenfolge dienen können. So können beispielsweise die neun eingezeichneten Tasten 3 mit Ziffern belegt werden, um so eine PIN in einem Geldautomaten einzugeben. Die Tasten können hierbei als vereinzelte, gegeneinander bewegliche Teile ausgebildet sein oder anhand von Piktogrammen erkennbar sein oder durch grafische Merkmale voneinander getrennt sein. Beispielsweise können Kontaktschalter oder Druckschalter als Tasten verwendet werden.

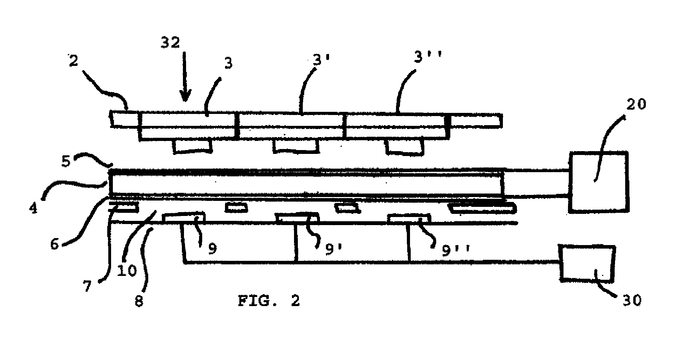

In Figur 2 ist ein Querschnitt durch die Tastatur 1 dargestellt. In dem Querschnitt sind die Vorderseite 2 sowie eine Vielzahl von Tasten 3, 3', 3" sichtbar. Unterhalb der Tasten befindet sich eine dielektrische Elastomerfolie 4, die mit einer vorderseitigen Graphenelektrode 5 und einer rückseitigen Graphenelektrode 6 ausgebildet ist. Unterhalb der rückseitigen Graphenelektrode 6 befindet sich eine Zwischenlage 7, die ebenfalls als Folie ausgebildet ist. Unterhalb der Zwischenfolie befindet sich eine Kontaktlage 8, die über eine Vielzahl von elektrischen Kontakten 9, 9', 9" verfügt. In der Zwischenlage 7 sind Öffnungen 10 vorhanden, so dass die von der Kontaktlage zunächst räumlich getrennte rückseitige Elektrode durch die Öffnung 10 mit den elektrischen Kontakten 9, 9', 9" in Berührung gebracht werden kann.

Die Kontaktlage kann beispielsweise durch eine Folie oder eine Leiterplatte gebildet sein. Die elektrischen Kontakte können beispielsweise durch Metallisierungen auf der Folie oder der Leiterplatte gebildet sein.

Weiterhin ist in dem Querschnitt eine in Figur 1 nicht dargestellte Steuervorrichtung 20 dargestellt, die mit der vorderseitigen Elektrode 5 und der rückseitigen Elektrode 6 verbunden ist. Weiterhin ist eine zweite Steuervorrichtung 30 vorhanden, die, beispielsweise als Multiplexerschaltung ausgebildet, mit den elektrischen Kontakten 9, 9', 9" (und den weiteren in Figur 1 dargestellten Tasten 3 zugeordneten elektrischen Kontakten) verbunden ist.

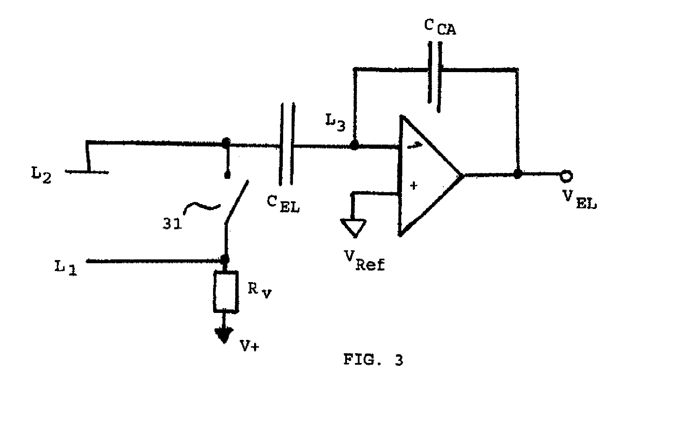

Die Steuervorrichtungen 20 und 30 dienen der Auswertung unterschiedlicher Signale. Mit der Steuervorrichtung 20 ist es möglich, eine sich verändernde Kapazität der Folie 4 über eine zwischen der vorderseitigen und der rückseitigen Elektrode angelegte Spannung bzw. deren Zeitverlauf aufgrund von aufgebrachten Drücken auszulesen. Ein Ersatzschaltbild der Steuervorrichtung 20 ist beispielhaft in Figur 3 dargestellt. Die rückseitige Elektrode 6 ist in dem Schaltbild der Figur 3 mit dem geerdeten Potential L2 dargestellt. Die vorderseitige Elektrode 5 wird auf einem Potential L3 gehalten. Die Kapazität der dielektrischen Elastomerfolie 4 wird durch die Kapazität C_{EL} des Kondensators dargestellt. Wird nun ein Druck irgendwo auf der Elastomerfolie aufgebracht, verändert sich die Kapazität C_{EL} und somit die zwischen den Elektroden 5 und 6 anliegende Spannung. Diese kann beispielsweise mittels eines Differenzverstärkers mit einer Referenzspannung V_{REF} abgeglichen werden und als Spannung V_{EL} ausgelesen werden.

Aus Figur 3 ist auch ersichtlich, dass die Steuerschaltung 20 und die Steuerschaltung 30 voneinander unabhängig agieren können. Im Schaltbild der Figur 3 entspricht der Spannung L1 beispielsweise die am elektrischen Kontakt 9 anliegende Spannung. In dem in Figur 2 dargestellten Zustand berühren die rückseitige Elektrode 6 und der elektrische Kontakt 9 einander nicht. Dies entspricht dem offenen Schalter 31 der Figur 3. Wird nun die Taste 3 in Richtung 32 gedrückt, berührt die Taste zunächst die vorderseitige Elektrode 5 und dehnt die Folie 4, bis die rückseitige Elektrode 6 mit dem elektrischen Kontakt 9 in Berührung tritt. Da die rückseitige Elektrode auf Masse gelegt ist, wird hierdurch die am elektrischen Kontakt 9 anliegende Spannung kurzgeschlossen, und es kann die Änderung der Spannung vom Signal V+ zum Massenpotential hin registriert werden. In dem Ersatzschaltbild der Figur 3 wird die Vielzahl der elektrischen Kontakte 9, 9', 9" durch parallel zum Schalter 31 angeordnete Schalter repräsentiert. Das Auslesen der einzelnen elektrischen Kontakte kann beispielsweise durch eine aus dem Stand der Technik bekannte Multiplexerschaltung vorgenommen werden.

Aus dem Ersatzschaltbild ist offensichtlich, dass die zwischen der vorder- und rückseitigen Elektrode anliegende Spannung als analoges Signal V_{EL} ausgelesen werden kann. Weiterhin ist ersichtlich, dass diese Messung völlig unabhängig von der Messung der Kurzschlüsse zwischen den elektrischen Kontakten 9 und der rückseitigen Elektrode 6 durchgeführt werden kann. Ob die rückseitige Elektrode 6 mit einem der elektrischen Kontakte in Berührung getreten ist, ist für die Messung der Größe V_{EL} nicht relevant. Im Gegenzug kann aus einer Messung der Spannung beispielsweise am elektrischen Kontakt 9 und einem entsprechenden Kurzschluss keinerlei Rückschluss über das zeitlich aufgelöste Signal V_{EL} getätigt werden; beide Signale werden unabhängig voneinander ausgewertet.

Das in Figur 3 dargestellte Ersatzschaltbild beruht unter anderem darauf, dass sowohl die vorderseitige als auch die rückseitige Elektrode 5 bzw. 6 als zusammenhängende Elektrode ausgebildet sind und somit der Gesamtverbund aus dielektrischer Elastomerfolie 4 und vorder- und rückseitiger Elektrode 5 und 6 einen einzigen Kondensator bildet. Zusammenhängend bedeutet hierbei, dass auf einer Vorder- oder Rückseite der Folie lediglich eine Elektrode angeordnet ist. Diese kann sich räumlich über einen Teilbereich oder über die gesamte Fläche der Folie erstrecken.

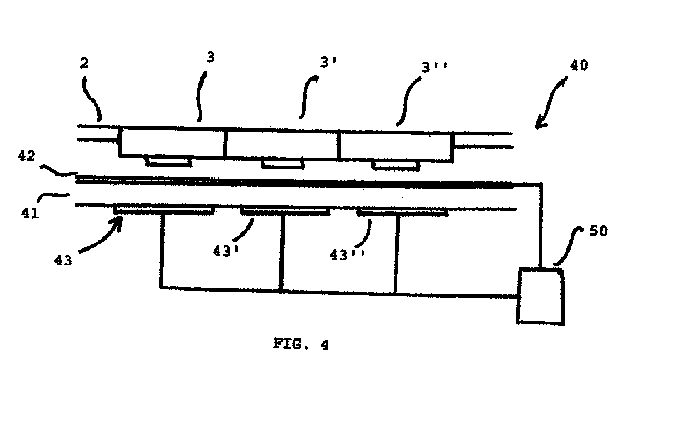

Ein weiteres Ausführungsbeispiel für eine Tastatur ist in Figur 4 dargestellt. Der Querschnitt durch die Tastatur 40 zeigt die Vorderseite 2 eines Ziffernblocks mit Tasten 3, 3', 3" und eine Elastomerfolie 41 mit einer durchgehenden zusammenhängenden vorderseitigen Elektrode 42 und einer Vielzahl von rückseitigen Elektroden 43, 43', 43", die aus einer einzigen zusammenhängenden Elektrode durch Strukturierung derselben erzeugt wurden. Die rückseitigen, nunmehr voneinander galvanisch getrennten Elektroden 43, 43', 43" sind mit einer Auswerteschaltung 50 verbunden. Die Auswerteschaltung 50 kann beispielsweise eine Multiplexerschaltung umfassen, um so die an den rückseitigen Elektroden 43 und der vorderseitigen Elektrode 42 anliegende Spannungsdifferenz zu messen. Da in dem vorliegenden Beispiel keine weitere Kontaktlage mit elektrischen Kontakten vorhanden ist, ist die Steuerschaltung 50 so ausgebildet, dass beim Überschreiten bzw. Unterschreiten einer Spannungsdifferenz (Schwelle) zwischen der vorderseitigen Elektrode 42 und einer der rückseitigen Elektroden 43, 43', 43" ein Drücken der damit korrespondierenden Taste 3, 3', 3" fingiert wird. Beim Überschreiten der Schwelle kann beispielsweise ein digitales Signal zum Auslesen einer bestimmten Zeichenfolge erzeugt werden. Zudem ist die Steuerschaltung 50 so ausgebildet, dass sämtliche an den rückseitigen Elektroden 43, 43', 43" abgreifbaren Spannungen, beispielsweise über eine Additionsschaltung, miteinander kombiniert werden können, um so einen zusammenhängenden Verlauf der Kapazitätsänderung über die Zeit mittels der Steuerschaltung 50 auslesen zu können. Dadurch, dass sowohl der zeitabhängige Verlauf der Kapazität der dielektrischen Elastomerfolie 41 zum biometrischen Abgleich als auch die Auswertung des Überschreitens der Schwellwerte zum Auslesen der exakten Zeichenfolge durchgeführt werden kann, können sowohl die PIN als auch ein biometrisches Signal zeitgleich mit einer Tastatur ausgelesen werden. Da im vorliegenden Beispiel auf eine Abstandsfolie bzw. die Kontaktlage verzichtet werden kann, kann die Tastatur zum einen besonders platzsparend und zum anderen ohne aufwendigere Anordnungen, wie beispielsweise den schichtweisen Aufbau der Tastatur der Figuren 1 und 2, realisiert werden. Allerdings wird in dieser Ausführungsform lediglich ein Signal gemessen, aus welchem sowohl das Passwort als auch das Biometriesignal ausgelesen werden.

## Patentansprüche

1. Tastatur (1) mit einer Vielzahl von Eingabefeldern (3, 3', 3"), wobei mindestens eine Kontaktlage (8) mit einer Vielzahl von elektrischen Kontakten (9, 9', 9") und eine dielektrische Folie (4; 41) mit einer vorderseitigen Elektrode (5; 42) und einer rückseitigen Elektrode (6; 43) vorhanden ist und die dielektrische Folie derart angeordnet ist, dass die rückseitige Elektrode mittels auf der vorderseitigen Elektrode aufgebrachtem Druck mit der Vielzahl von elektrischen Kontakten in Berührung gebracht werden kann.

2. Tastatur nach Anspruch 1, wobei die dielektrische Folie eine dielektrische Elastomerfolie ist.

3. Tastatur nach einem der Ansprüche 1 oder 2, wobei zwischen der rückseitigen Elektrode und der Kontaktlage eine Zwischenlage (7) angeordnet ist.

4. Tastatur nach einem der vorhergehenden Ansprüche, wobei mindestens ein Tastenelement vorhanden und derart angeordnet ist, dass das Tastenelement mit der vorderseitigen Elektrode in Berührung gebracht werden kann.

5. Tastatur nach einem der vorhergehenden Ansprüche, wobei die rückseitige Elektrode und/oder vorderseitige Elektrode jeweils als zusammenhängende Elektrode ausgebildet ist.

6. Tastatur nach einem der vorhergehenden Ansprüche, wobei die dielektrische Folie genau einen Kondensator bildet.

7. Tastatur nach einem der vorhergehenden Ansprüche, wobei die rückseitige Elektrode auf Masse oder ein festes Potential geschaltet ist.

8. System mit einer Tastatur nach einem der vorhergehenden Ansprüche und einer ersten Steuereinrichtung (20) für die Tastatur, wobei die erste Steuereinrichtung derart ausgebildet und angeschlossen ist, dass eine zwischen der vorderseitigen und der rückseitigen Elektrode anliegende Spannung gemessen wird und/oder eine Spannung an die vorderseitige Elektrode anlegbar ist.

9. System nach Anspruch 8, wobei eine zweite Steuereinrichtung (30) derart ausgebildet und angeschlossen ist, dass eine Spannung mindestens eines der Vielzahl der elektrischen Kontakte gemessen wird und/oder eine Spannung an den mindestens einen Kontakt anlegbar ist.

10. System nach Anspruch 9, wobei die erste und zweite Steuereinrichtung unabhängig voneinander ausgebildet sind.

11. System mit einer Tastatur (40), welche eine Vielzahl von Eingabefeldern (3, 3', 3") aufweist und eine dielektrische Elastomerfolie (41) mit einer vorderseitigen Elektrode (42) und einer rückseitigen Elektrode (43) umfasst, und einer Steuereinrichtung (50), welche eine Auswertungsschaltung zum Auslesen von Signalen der Vielzahl von Eingabefeldern umfasst und weiterhin eine Additionsschaltung aufweist, wobei die Additionsschaltung ein die Signale der Vielzahl von Eingabefeldern summierendes Additionssignal bereitstellt.
